# EUROPEAN PATENT SPECIFICATION

(11) **EP 2 411 458 B1**
(45) Date of publication and mention of the grant of the patent: **25.06.2014**
(21) Application number: 10711113.0
(22) Date of filing: 18.03.2010
(51) Int. Cl.: C08J 9/00

(54) **POLYMERIC FOAM CONTAINING ALUMINA BOEHMITE**
POLYMERSCHAUM, ENTHALTEND ALUMINIUMOXID-BÖHMIT
MOUSSE POLYMÈRE CONTENANT DE L'ALUMINE BOEHMITE

(30) Priority: 27.03.2009 US 163891 P
(43) Date of publication of application: 01.02.2012
(73) Proprietor: Dow Global Technologies LLC, Midland, MI 48674 (US)
(72) Inventor: VO, Van-Chau, F-67460 Souffelweyersheim (FR)
(74) Representative: Beck Greener
(86) International application number: PCT/US2010/027763
(87) International publication number: WO 2010/111106

(56) References cited:
- EP-A1- 1 489 136
- WO-A2-2007/117276
- CN-A- 1 888 061
- DE-A1- 19 911 041

## Description

### BACKGROUND OF THE INVENTION

### Cross Reference Statement

This application claims the benefit of U.S. Provisional Application No. 61/163,891, filed March 27, 2009, the entire content of which is incorporated herein by reference.

### Field of the Invention

The present invention relates to polymeric foam and a process for preparing polymeric foam.

### Description of Related Art

Thermally insulating polymeric foam is commonplace in our world today. Thermally insulating polymeric foam sheets are available in most supply centers for implementation in structural building. Current energy costs and desires by consumers for more comfortable homes continually drive development of more desirable thermally insulating polymeric foams. One paramount driver is to reduce the thermal conductivity through polymeric foam.

Inclusion of an infrared attenuator in polymeric foam is one means of decreasing thermal conductivity through the foam. Infrared attenuators in polymeric foam inhibit the penetration of infrared energy through the foam and thereby help to retain heat on one side of the foam. Common infrared attenuators include carbon black, graphite and titanium dioxide (TiO2). However, each of these infrared attenuators creates challenges in manufacturing desirable thermally insulating polymeric foam.

Carbon black, graphite and titanium dioxide (TiO₂) all have particle sizes of approximately one micrometer or smaller. Particulate additives of that size act as nucleating agents during manufacture of polymeric foam. At a given loading weight, an additive with such a small particle size and large surface area provides a multitude of nucleating sites each of which can induce formation of a cell during foam expansion. As a result, carbon black, graphite and TiO₂ all promote formation of small cell sizes. Small cell sizes are undesirable in the process of making thermally insulating foam because small cell sizes lead to a high foam density, which becomes economically unfavorable. In that regard, an infrared attenuator having a larger particle size is desirable. At the same loading weight, an additive having a larger size provides fewer nucleating sites than a smaller sized additive. Yet, larger particle sized fillers can promote open cell structures in the polymeric foam. A particle that has a size larger than the cell wall between to cells can cause rupturing of the wall between the cells and promote open cell structure throughout the foam, which is also undesirable for thermally insulating foam. Cell walls of thermally insulation polymeric foam are generally 0.8 to 3 microns thick.

Carbon black and graphite have a characteristic black or grey color. These additives act as pigments that cause polymeric foam containing carbon black and graphite to be black or grey. This can be undesirable if there is a desire to have a color other than black or grey because it is difficult to modify the color of black or grey foam much by addition of other pigments. Some consumers may desire white foam for its clean appearance. Some manufactures may desire thermally insulating foam that they can pigment to a certain color representative of their products, a color that is not grey or black. Carbon black and graphite become undesirable additives in these situations.

Titanium dioxide (TiO₂) is white in color and therefore does not suffer from the challenging black and grey color of carbon black and graphite. However, titanium dioxide has a small particle size that promotes nucleation. Moreover, titanium dioxide is such an efficient white pigment that it also makes it difficult to color foam to a particular non-white color because the TiO₂ washes out the non-white pigment color.

It is desirable to find a thermally insulating additive for polymeric foam that does not act as a nucleator as much as do carbon black, graphite and TiO₂ yet that allows for formation of closed cell foam. Moreover, it is desirable to find such a thermally insulating additive that has minimal affect on the color of polymeric foam and that minimally interferes with use of pigments in coloring the polymeric foam.

### BRIEF SUMMARY OF THE INVENTION

The present invention solves one or more problems associated with providing a polymeric foam containing a thermally insulating additive that does not act as a nucleator as much as carbon black, graphite and TiO₂ yet that allows for formation of closed cell foam while having minimal effect on the color of the polymeric foam and that minimally interferes with use of pigments in coloring the polymeric foam.

The present invention results from exploring alumina boehmite as an additive in polymeric foam. Alumina boehmite is typically used as a catalyst in applications such as chemical catalysts, automotive washcoats catalysts, binder and support catalysts and for use as sol-gel abrasives and polishing compounds. Unexpectedly and surprisingly, alumina boehmite acts as a thermally insulating additive in polymeric foam. Moreover, alumina boehmite does not cause undesirably small cell sizes and has a particle size larger than carbon black yet allows formation of closed cell foam. Alumina boehmite also has minimal affect on the color of polymeric foam and has little effect on the pigmenting of polymeric foam.

In a first aspect, the present invention is a process for preparing polymeric foam comprising the following steps: (a) providing a foamable polymer composition comprising a blowing agent dispersed in a polymer matrix, the polymer matrix having a softening temperature; and (b) exposing the foamable polymer composition while at a temperature at or above the softening temperature of the polymer matrix to an environment having a pressure low enough to cause the foamable polymer composition to expand into a polymeric foam; wherein the foamable polymer composition further comprises alumina boehmite dispersed in the polymer matrix, and wherein more than 50 percent by weight of the polymers in the polymer matrix are thermoplastic polymers selected from olefinic polymers, alkenyl aromatic homopolymers and copolymers comprising both olefinic and alkenyl aromatic components.

Some desirable embodiments of the first aspect can have any one or any combination of more than one of the following additional characteristics: the alumina boehmite is present in the polymer matrix at a concentration in a range of 0.1 to 30 weight-percent based on polymer matrix weight; the alumina boehmite has a nitrate concentration of less than 3.0 weight percent; 50 weight-percent of all the polymers in the polymer matrix are alkenyl aromatic polymers; at least 95 weight-percent of all polymers in the polymer matrix are selected from polystyrene homopolymer and styrenic copolymers; the blowing agent comprises carbon dioxide; the blowing agent comprise carbon dioxide and at least one of iso-butane and water; and the polymeric foam has an open cell content of five percent or less.

In a second aspect, the present invention is polymeric foam comprising a polymer matrix defining a plurality of cells dispersed therein and further comprising alumina boehmite dispersed within the polymer matrix, and wherein more than 50 percent by weight of the polymers in the polymer matrix are thermoplastic polymers selected from olefinic polymers, alkenyl aromatic homopolymers and copolymers comprising both olefinic and alkenyl aromatic components.

Some desirable embodiments of the second aspect can further have any one or any combination of more than one of the following characteristics: the polymeric foam is extruded polymeric foam that is free of a network of polymer skins defining foam beads; the alumina boehmite is present at a concentration in a range of 0.1 to 30 weight percent based on total polymer weight in the polymer matrix; the alumina boehmite is present at a concentration in a range of 0.5 to 5 weight-percent based on polymer composition weight; the alumina boehmite has a nitrate concentration of less than three weight percent; more than 50 weight-percent of all the polymers in the polymer matrix are alkenyl aromatic polymers; the alkenyl aromatic polymer is selected from polystyrene homopolymer and styrenic copolymers; and the polymeric foam has an open cell content of five percent or less.

The process of the present invention is useful for preparing the polymeric foam of the present invention. The foam of the present invention is useful as a thermal insulating material.

### DETAILED DESCRIPTION OF THE INVENTION

All ranges herein include endpoints unless otherwise noted.

ASTM refers to American Society for Testing and Materials. ISO refers to International Organization for Standardization. EN refers to European Norm. DIN refers to Deutsches Institute für Normung e.V. ASTM, ISO, EN and DIN test methods refer to the method as of the year in the hyphenated suffix of the method number or, if there is no hyphenated suffice, the most recent method published prior to the priority date of the present document.

In the process of the present invention provide a foamable polymer composition comprising a blowing agent dispersed in a polymer matrix.

The blowing agent can be any blowing agent composition suitable for use in preparing polymeric foam now or in the future. For example, the blowing agent can be any one or any combination of more than one blowing agent selected from a group consisting of: inorganic gases such as carbon dioxide, argon, nitrogen, and air; organic blowing agents such as water, aliphatic and cyclic hydrocarbons having from one to nine carbons including methane, ethane, propane, n-butane, iso-butane, n-pentane, iso-pentane, neo-pentane, cyclobutane, and cyclopentane; fully and partially halogenated alkanes and alkenes having from one to five carbons, preferably that are chlorine-free (*e*.*g*., difluoromethane (HFC-32), perfluoromethane, ethyl fluoride (HFC-161), 1,1,-difluoroethane (HFC-152a), 1,1,1-trifluoroethane (HFC-143a), 1,1,2,2-tetrafluoroethane (HFC-134), 1,1,1,2 tetrafluoroethane (HFC-134a), pentafluoroethane (HFC-125), perfluoroethane, 2,2-difluoropropane (HFC-272fb), 1,1,1-trifluoropropane (HFC-263fb), 1,1,1,2,3,3,3-heptafluoropropane (HFC-227ea), 1,1,1,3,3-pentafluoropropane (HFC-245fa), and 1,1,1,3,3-pentafluorobutane (HFC-365mfc)); aliphatic alcohols having from one to five carbons such as methanol, ethanol, n-propanol, and isopropanol; carbonyl containing compounds such as acetone, 2-butanone, and acetaldehyde; ether containing compounds such as dimethyl ether, diethyl ether, methyl ethyl ether; carboxylate compounds such as methyl formate, methyl acetate, ethyl acetate; carboxylic acid and chemical blowing agents such as azodicarbonamide, azodiisobutyronitrile, benzenesulfo-hydrazide, 4,4-oxybenzene sulfonyl semi-carbazide, p-toluene sulfonyl semi-carbazide, barium azodicarboxylate, N,N'-dimethyl-N,N'-dinitrosoterephthalamide, trihydrazino triazine and sodium bicarbonate.

In one desirable embodiment, the blowing agent is selected from a group consisting of carbon dioxide, hydrocarbons having from one to five carbons and water. The blowing agent can contain carbon dioxide, carbon dioxide and water, carbon dioxide and one or more of the hydrocarbons, or carbon dioxide with water and one or more of the hydrocarbons. A particularly desirable hydrocarbon for use as the, or as one of the, hydrocarbons is iso-butane. Particular examples of this desirable embodiment contain 40-100 wt% carbon dioxide, 0-60 wt% iso-butane and 0-20 wt% water, with wt% based on total blowing agent weight.

Another particularly desirable blowing agent is 1,1,1,2-tetrafluoroethane (HFC-134a). HFC-134a can be included in the desirable embodiments containing carbon dioxide and optionally water and optionally one or more hydrocarbon (particularly iso-butane). Another desirably blowing agent combination includes carbon dioxide at a concentration of 10-90 wt%, carbon dioxide at a concentration of 0-50 wt%, iso-butane at a concentration of 0-60 wt%, ethanol at a concentration of 0-50 wt% and water at a concentration of 0-20 wt%, with wt% based on total blowing agent weight.

Blowing agent is generally present in the foamable polymer composition at a concentration of 0.05 to 0.35, preferably 0.08 to 0.25, and most preferably 0.10 to 0.20 moles per hundred grams of polymer in the polymer matrix.

The polymer matrix is a continuous phase comprising one or a combination of more than one polymer. More than 50 percent by weight of the polymers in the polymer matrix are thermoplastic polymers. Thermoplastic polymers can account for 70 weight-percent (wt%), 80 wt%, 90 wt% or even 100 wt% of the polymers in the polymer matrix. Suitable thermoplastic polymers include olefinic polymers, alkenyl-aromatic homopolymers and copolymers comprising both olefinic and alkenyl aromatic components. Examples of suitable olefinic polymers include homopolymers and copolymers of ethylene and propylene.

Desirably, the polymer matrix comprises one or more than one alkenyl-aromatic polymer. Alkenyl-aromatic polymer is desirably 50 wt% or more, preferably 70 wt% or more and can be 80 wt% or more, 90 wt% or more, 95 wt% or more and can even be 100 wt% of all the polymers in the polymer matrix. An alkenyl-aromatic polymer is a polymer containing alkenyl aromatic monomers polymerized into the polymer structure. Alkenyl-aromatic polymer can be homopolymers, copolymers or blends of homopolymers and copolymers. Alkenyl-aromatic copolymers can be random copolymers, alternating copolymers, block copolymers or any combination thereof and my be linear, branched or a mixture thereof.

Styrenic polymers are particularly desirably alkenyl-aromatic polymers. Styrenic polymers have styrene monomer polymerized in the polymer backbone and include styrene homopolymer, copolymer and blends thereof. Polymeric foams comprising more than 50 wt% styrenic polymers are Extruded Polystyrene, or XPS, foam. The foam of the present invention is desirably XPS foam.

Desirably, styrenic homopolymer for use in the present invention has a weight average molecular weight (Mw) in a range of 100,000 to 500,000 grams per mole, preferably from 130,000 to 400,000 grams per mole. The molecular weight distribution (Mw/Mn) is in a range from 1.0 to 10.0 and preferably in a range of 1.5 to 5.0, and most preferably from 2.0 to 4.0

Examples of styrenic copolymers suitable for the present invention include copolymers of styrene with one or more of the following: acrylic acid, methacrylic acid, ethacrylic acid, maleic acid, itaconic acid, acrylonitrile, maleic anhydride, methyl acrylate, ethyl acrylate, isobutyl acrylate, n-butyl acrylate, methyl methacrylate, vinyl acetate and butadiene.

Styrene-acrylonitrile copolymer (SAN) is a particularly desirable alkenyl-aromatic polymer for use in the present invention because of its ease of manufacture and monomer availability. SAN copolymer can be a block copolymer or a random copolymer, and can be linear or branched. SAN provides greater water solubility than polystyrene homopolymer, thereby facilitating use of an aqueous blowing agent. SAN also has higher heat distortion temperature than polystyrene homopolymer, which provides for foam having a higher use temperature than polystyrene homopolymer foam. Desirable embodiments of the present process employ polymer compositions that comprise, even consist of SAN. The alkenyl-aromatic polymer, even the polymer matrix itself may comprise or consist of a polymer blend of SAN with another polymer such as polystyrene homopolymer.

Desirably, SAN for use in the present invention has a weight averaged molecular weight (Mw) in a range of 50,000 to 300,000 grams per mole, preferably from 100 to 200,000 grams per mole. The molecular weight distribution (Mw/Mn) is desirably in a range of 1.0 to 10, preferably in a range of 1.2 to 5.0 and most preferably in a range of 1.5 to 3.0.

The foamable polymer composition further comprises alumina boehmite dispersed within the polymer matrix. Alumina boehmite is an aluminum oxide hydroxide mineral that is dimorphous with diaspore. Alumina boehmite crystallites are leaflet or rectangular shaped and the shape is characterized by a high aspect ratio. Alumina boehmite has crystallite sizes of 2 to 200 nanometers (nm). Alumina boehmite for use in the present invention can haves a crystallite size (diameter) of 2 nm or greater, even 6 nm or greater and has a crystallize size of 200 nm or less, and can have a size of 100 nm or less, even 60 nm or less. Alumina boehmite is typically used as a catalyst in applications such as chemical catalysts, automotive washcoats catalysts, binder and support catalysts and for use as sol-gel abrasives and polishing compounds, viscosifiers and anti-skid agents (*see*, *for example*, the description of HiQ® boehmite alumina from BASF at http://www.catalysts.basf.com/main/process/adsorbents/alumina_based adsorbent technolo gies/hiq_boehmite alumina.be).

The alumina boehmite can be organically modified and may contain a high concentration of nitrate as a result of being prepared or synthesized with nitric acid. The alumina boehmite desirably has a nitrate content of 3.0 wt% or less based on total alumina boehmite weight in order to ensure it has suitable chemical and thermal stability for temperatures of 180°C or higher, which are possible in extrusion foaming processes. When the nitrate content exceeds 3.0%, decomposition of the alumina boehmite can occur at elevated temperatures and cause yellowing in the polymeric foam.

Surprisingly, research leading to the present invention discovered that the alumina boehmite acts as an infrared attenuator in polymeric foam but without having the strong and detrimental nucleating effect of carbon black, graphite and titanium dioxide. Moreover, alumina boehmite surprisingly has little effect on pigmentation of the polymeric foam, unlike carbon black, graphite and titanium dioxide.

The foamable polymer composition desirably contains at least 0.1 wt% alumina boehmite based on polymer matrix weight in order to achieve effective infrared attenuation in the resulting polymeric foam. Preferably, the alumina boehmite is present at a concentration of 0.2 wt% or more, more preferably at a concentration of 0.5 wt% or more based on polymer matrix weight in order to achieve optimal infrared attenuation. Typically, alumina boehmite is present at a concentration of 30 wt% or less, preferably 20 wt% or less and still more preferably 10 wt% or less based on polymer matrix weight.

The foamable polymer composition can optionally contain additionally additives, typically dispersed within the polymer matrix. Common additives include any one or combination of more than one of the following: infrared attenuating agents (*for example,* carbon black, graphite, metal flake, titanium dioxide); clays such as natural absorbent clays *(for example,* kaolinite and montmorillonite) and synthetic clays; nucleating agents (*for example,* talc and magnesium silicate); flame retardants (*for example,* brominated flame retardants such as brominated polymers, hexabromocyclododecane, phosphorous flame retardants such as triphenylphosphate, and flame retardant packages that may including synergists such as, or example, dicumyl and polycumyl); lubricants *(for example,* calcium stearate and barium stearate); and acid scavengers (*for example,* magnesium oxide and tetrasodium pyrophosphate).

The polymer matrix has a softening temperature. At and above its softening temperature a polymer matrix is capable of being mixed with additives and blowing agents.

"Softening temperature" (Tₛ) for a polymer matrix whose polymers are all semi-crystalline is the melting temperature for the polymer matrix. "Melting temperature" (Tₘ) for a semi-crystalline polymer is the temperature half-way through a crystalline-to-melt phase change as determined by differential scanning calorimetry (DSC) upon heating a crystallized polymer at a specific heating rate. Determine Tₘ for a semi-crystalline polymer according to the DSC procedure in ASTM method E794-06. Determine Tₘ using a heating rate of 10 degrees Celsius (°C) per minute. If the polymer component only contains miscible polymers and only one crystalline-to-melt phase change is evident in its DSC curve, then Tₘ for the polymer matrix is the temperature half-way through the phase change. If multiple crystalline-to-melt phase changes are evident in a DSC curve due to the presence of immiscible polymers, then Tₘ for the polymer matrix is the Tₘ of the continuous phase polymer. If more than one polymer is continuous and they are not miscible, then the Tₘ for the polymer matrix is the highest Tₘ of the continuous phase polymers.

The softening temperature for a polymer matrix whose polymers are amorphous is the glass transition temperature for the polymer matrix. "Glass transition temperature" (T_{g}) for a polymer component is as determined by DSC according to the procedure in ASTM method E1356-03. If the polymer matrix contains only miscible polymers and only one glass transition phase change is evident in the DSC curve, then T_{g} of the polymer matrix is the temperature half-way through the phase change. If multiple glass transition phase changes are evident in a DSC curve due to the presence of immiscible amorphous polymers, then T_{g} for the polymer matrix is the T_{g} of the continuous phase polymer. If more than one amorphous polymer is continuous and they are not miscible, then the T_{g} for the polymer matrix is the highest Tg of the continuous phase polymers.

If the polymer matrix contains a combination of semi-crystalline and amorphous polymers, the softening temperature of the polymer matrix is the softening temperature of the continuous phase polymer component. If the semi-crystalline and amorphous polymer phases are co-continuous, then the softening temperature of the polymer matrix is the higher softening temperature of the two phases.

The present invention further includes exposing the foamable polymer composition to an environment having a pressure low enough to cause the foamable polymer composition to expand into a polymeric foam while the foamable polymer composition is at a temperature at or above the softening temperature of the polymer matrix. The broadest scope of the present invention captures many different foaming processes which may differ in the procedure for carrying out this step of the process. In the broadest scope, the present invention encompasses all methods of carrying out both providing the foamable polymer composition and exposing the foamable polymer composition to a pressure low enough to cause the foamable polymer composition to expand into a polymeric foam while the polymer composition is at a temperature at or above the softening temperature of the polymer matrix.

Examples of suitable foaming processes include expanded polymer bead processes and extrusion processes.

Expanded bead foam processes are batch processes that require preparing a foamable polymer composition comprising granules comprising thermoplastic polymer matrix that has blowing agent dispersed within the granule. Incorporate the blowing agent into the polymer granule in any manner including imbibing granules of thermoplastic polymer composition with a blowing agent under pressure. Each granule (or bead) is, in a sense, a foamable polymer composition. Often, though not necessarily, the foamable beads undergo at least two expansion steps. An initial expansion occurs by heating the granules above the softening temperature of the polymer matrix of the granules and allowing the blowing agent to expand the beads in an atmosphere of pressure low enough to allow expansion. A second expansion is often done with multiple beads in a mold by exposing the beads to steam to further expand the beads and fuse them together. A bonding agent is commonly coated on the beads before the second expansion to facilitate bonding of the beads together.

Expanded bead foam comprises multiple expanded polymer beads affixed to one another. As a result, a characteristic feature of expanded bead foam is a continuous network of polymer skins throughout the foam that defines each expanded bead and that generally interconnects all of the surfaces of the polymeric foam. The polymer skin network corresponds to the surface of each individual bead and encompasses relatively small and localized groups of cells throughout the foam. The polymer skin network is of higher density than the portion of foam containing groups of cells that the network encompasses, including cell walls.

Extrusion processes are more desirable than expanded bead foam processes because produce polymeric foam that is free of such an extensive internal network of bead skins that can increase thermal conductivity through the polymeric foam. Extrusion processes include coalesced strand foam processes and individual foam sheet and board processes (*that is*, processes that extrude a foam that is free from multiple foamed elements affixed to one another). Extrusion processes can be semi-continuous, such as an accumulator extrusion process, or continuous, meaning the process is continuous from addition of the components into an extruder to formation of the polymeric foam without delay in-between

In an extrusion process, provide the foamable polymer composition in an extruder at the initial temperature and initial pressure and extrude through a foaming die into an atmosphere if pressure lower than the initial pressure to allow the foamable polymer composition to expand. One way to prepare the foamable polymer composition is to feed polymer into the extruder and heat to the initial temperature within the extruder. Addition of alumina boehmite and any additional filters into the extruder can occur simultaneously with the polymer, downstream in the extruder from addition of the polymer or a combination of both. Generally, inject blowing agent at the initial pressure into the extruder downstream from the polymer addition and mix with the polymer and alumina boehmite and any other additive to form the foamable polymer composition. The resulting combination of polymer, additive(s) and blowing agent form a foamable polymer composition.

An accumulation extrusion process comprises: 1) mixing a thermoplastic material and a blowing agent composition to form a foamable polymer composition; 2) extruding the foamable polymer composition into a holding zone maintained at a temperature and pressure which does not allow the foamable polymer composition to foam; the holding zone has a die defining an orifice opening into a zone of lower pressure at which the foamable polymer composition foams and an openable gate closing the die orifice; 3) periodically opening the gate while substantially concurrently applying mechanical pressure by means of a movable ram on the foamable polymer composition to eject it from the holding zone through the die orifice into the zone of lower pressure, and 4) allowing the ejected foamable polymer composition to expand to form the foam. USP 4,323,528, incorporated herein by reference, discloses such a process in a context of making polyolefin foams.

In a continuous extrusion process the foamable polymer composition continues through the extruder and is expelled, generally through a foaming die, into an atmosphere having a pressure lower than the initial pressure and sufficiently low to allow for foaming of the foamable polymer composition all without delay or interruption.

In a coalesced strand foam process, expel the foamable polymer composition through a foaming die having a plurality of openings to extrude multiple strands of foamable polymer composition simultaneously. As the strands expand they contact one another and become affixed to one another to form a coalesced strand foam. Coalesced strand foams are similar to expanded bead from in that they both have a skin network within the foam. However, coalesced strand foams are distinct from expanded bead foam in that the skin network does not surround small localized beads of cells but rather extend the full length of a foam and remain open on the ends.

In an extrusion process that prepares an individual foam sheet and board, extrude the foamable polymer composition through a foaming die having a single opening. An individual foam sheet or board made by an extrusion process is free of a skin network within the foam that has a density higher than the cell walls.

The polymeric foam resulting from the process of the present invention is a polymeric foam of the present invention. The polymeric foam comprises a polymer matrix that defines a plurality of cells and that contains alumina boehmite dispersed within it. The polymer matrix of the polymeric foam is as described for the foamable polymer composition. The alumina boehmite is also as described for the foamable polymer composition, including preferred concentrations.

The foam of the present invention desirably has a density of 200 kilograms per cubic meter (kg/m³) or less, preferably 100 kg/m³ or less, still more preferably 64 kg/m³ or less. Lower density foams are desirable to reduce cost of manufacture and transportation as well as for ease of handling. Typically, the polymeric foam of the present invention has a density of 8 kg/m³ or higher and desirably has a density of 16 kg/m³ or higher, preferably 24 kg/m³ or higher in order to ensure mechanical integrity during handling. Determine foam density according to the method of ISO 845-95.

The foam of the present invention desirably has an average cell size of 0.05 millimeters (mm) or more, preferably 0.1 mm or more, still more preferably 0.2 mm or more and generally has a cell size of 5.0 mm or less, typically 1.0 mm or less. Determine average cell size according to ASTM method D-3576.

The open cell content of the foam of the present invention is desirably 30% or less, preferably 10% or less, still more preferably 5% or less, even more preferably 2% or less. The open cell content can be 1% or less or even 0%. Determine open cell content according the method of ASTM D6226-05.

The polymeric foam of the present invention is desirably a thermally insulating material having a thermal conductivity of 40 milliWatts per meter*Kelvin (Mw/m*K) or less, preferably 35 mW/m*K or less, still more preferably 33 mW/m*K or less. Determine thermal conductivity according to the method of EN 8301.

### Examples

### Preparation

### Control Foam

Prepare a control sample without any infrared attenuating agents by first dry blending 100 weight-parts of polystyrene resin composed of 80 wt% low Mw polystyrene (Mw=145,000 g/mol, Mw/Mn = 3.3) and 20 wt% high Mw polystyrene (Mw = 200,000 g/mol, Mw/Mn = 2.7) with 0.1 weight parts barium stearate, 0.2 weight parts copper phthalocyanine blue pigment (in a 20 wt% concentrate in polystyrene) and 0.2 weight parts polyethylene and feed the blend in to a 50 millimeter (mm) extruder that heats the blend to 200°C and mixes it thoroughly. While in the extruder, add a blowing agent consisting of 4 weight parts carbon dioxide and 1.5 weight parts iso-butane at a pressure that precludes foaming (13-25 megapascals for mixing) to form a foamable polymer composition. After blending the foamble polymer composition, reduce its temperature to approximately 127 °C and extrude it through a slit die into atmospheric pressure (101 kilopascals) and ambient temperature (23°C) and allow it to form into rectangular polymeric foam. Die pressure is in a range of 4-12 megapascals.

### Comparative Examples A-C

Prepare the Comparative Examples (Comp Exs) in like manner as the Control except:
**Comp Ex A:** Omit the blue pigment and in the dry blend include carbon black having an average particle size of approximately 250 nanometers (*for example,* THERMAX®-991, THERMAX is a trademark of Cancarb Co.). Add the carbon black into the dry blend as a compounded concentrate that is 60 wt% polystyrene. Comp Ex A(i) contains 2.5 wt% carbon black and Comp Ex A(ii) contains 5 wt% carbon black.
**Comp Ex B:** Omit the blue pigment and in the dry blend include graphite having an average particle size of approximately 3.0 micrometers (*for example,* UF-1 from Kopfmuel GmbH). Add the graphite into the dry blend as a compounded concentrate that is 70 wt% polystyrene. Comp Ex B(i) contains 2.5 wt% graphite and Comp Ex B(ii) contains 5 wt% Graphite.
**Comp Ex C:** in the dry blend include organic coated titanium dioxide having an average particle size of approximately 220 nanometers (*for example,* Ti-PURE® R-104, Ti-PURE is a trademark of E.I.Du Pont De Nemours and Company). Add the coated titanium dioxide into the dry blend as a compounded concentrate that is 50 wt% polystyrene. Comp Ex C(i) contains 2.5 wt% titanium dioxide and Comp Ex C(ii) contains 5 wt% titanium dioxide.

### Examples 1 and 2

Prepare Examples (Exs) in like manner as the Control Foam except:
**Ex 1:** in the dry blend include alumina boehmite having an average particle size of approximately 15 microns (*for example,* PURAL®-NF, PURAL is a trademark of Sasol Germany GmbH). Add the alumina boehmite into the dry blend as a compounded concentrate that is 80% polystyrene). Ex 1(i) contains 2.5 wt% alumina boehmite and Ex 1(ii) contains 5 wt% alumina boemite.
**Ex 2:** in the dry blend include alumina boehmite having an average particle size of approximately 40 microns (*for example,* DISPAL® 25F4, DISPAL is a trademark of Sasol North America, Inc.). Add the alumina boehmite into the dry blend as a compounded concentrate that is 80% polystyrene). Ex 2(i) contains 2.5 wt% alumina boehmite and Ex 2(ii) contains 5 wt% alumina boemite.

### Properties

Table 1 lists typical properties of the Control, Comp Exs and Ex. Determine density according to the method of ISO 845-95. Determine Open Cell Content according to the method of ASTM D6226-05. Determine average cell size according to the method of ASTM D-3576. Determine thermal conductivity according to the method of EN8301.

Characterize the color of the foam using the L*a*b* (CIELAB) color space. CIE L*a*b* (CIELAB) is a color spaced specified by the International Commission on Illumination (Commission Internationale d'Eclairage). Characterize the foam samples in terms of the CIE L*a*b* color space coordinates using a Minolta Chroma Meter CR210 colormeter. The L* coordinate represents the lightness of the color (L* of 0 is black and L* of 100 is diffuse white). The a* coordinate corresponds to a range between red/magenta and green (more negative a* values correspond to more green while more positive a* values correspond to more red/magenta). The b* coordinate corresponds to a color range between yellow and blue (more negative b* values correspond to more blue while more positive b* values correspond to more yellow).

**Table 1**

| **Property** | **Control Sample** | **Comparative Example** | | | | | | **Example** | | | |
|---|---|---|---|---|---|---|---|---|---|---|---|
| | | ***A(i)*** | ***A(ii)*** | ***B(i)*** | ***B(ii)*** | ***C(i)*** | ***C(ii)*** | ***1(1)*** | ***1(ii)*** | ***2(i)*** | ***2(ii)*** |
| Amount of Infrared Attenuator | 0 | 2.5 | 5 | 2.5 | 5 | 2.5 | 5 | 2.5 | 5 | 2.5 | 5 |
| (*weight-parts*) | | | | | | | | | | | |
| Thickness | 24 | 22 | 22 | 19 | 19 | 21 | 23 | 28 | 26 | 28 | 28 |
| (mm) | | | | | | | | | | | |
| Density | 36.5 | 37.4 | 38.8 | 38 | 39.2 | 37.3 | 36.8 | 33.8 | 35.0 | 33.7 | 33.9 |
| (*kg*/*m³*) | | | | | | | | | | | |
| Open Cell Content | 1.0 | 1.4 | 0.5 | 5.3 | 12.8 | 0.5 | 0.2 | 1.5 | 0.7 | 1.2 | 0.0 |
| (%) | | | | | | | | | | | |
| Cell Size | 0.14 | 0.10 | 0.11 | 0.08 | 0.06 | 0.10 | 0.15 | 0.20 | 0.19 | 0.19 | 0.19 |
| (*mm*) | | | | | | | | | | | |
| Thermal Conductivity | 32.6 | 31.1 | 30.1 | 29.3 | 29.5 | 31.5 | 30.6 | 30.5 | 30.0 | 30.8 | 30.6 |
| (*mWlm*K at 10°C after 30 days*) | | | | | | | | | | | |
| L* | 85.6 | 59.3 | 55.4 | 63.0 | 59.1 | 89.0 | 89.0 | 83.3 | 85.2 | 85.5 | 87.2 |
| a* | -5.7 | 0.1 | -0.1 | 0.2 | 0.2 | -5.2 | -5.1 | -6.5 | -5.8 | -6.0 | -7.3 |
| b* | -16.5 | -1.7 | -1.7 | -1.3 | -0.9 | -13.3 | -12.2 | -17.9 | -15.6 | -15.4 | -14.2 |

Comparing the characteristics of the Control Sample, Comp Examples and Examples the following observations are evident:
■ Alumina boehmite acts as an infrared attenuator as is evident by a reduction in thermal conductivity in each of the Examples.
■ The alumina boehmite examples all illustrate in *increase* in cell size relative to the Control, just the opposite effect expected by nucleation. In contrast, carbon black, graphite and titanium dioxide all tend to induce a decrease the cell size of the polymeric foam (C(ii) excepted, which remained approximately equal to the control).
■ The Control Foam and the foam containing alumina boehmite (Examples 1 and 2) have nearly identical coloring. In contrast, the foams produced with carbon black (A foams) and graphite (B foams) are dramatically different in color - darker, redder and much less blue. The foams produced with the coated titanium dioxide are whiter, less green and less blue than the control. The alumina boehmite did not dramatically affect the color of the foam while the other infrared attenuators did.

These polymeric foams illustrate surprising behavior of alumina boehmite as an infrared attenuating agent in polymeric foam.

### Example 3 - Nitrated Alumina Boehmite

Prepare Example 3 in like manner as Exs 1 and 2 with the following differences:
(1) Use as the alumina boehmite DISPERAL® P2 (from Sasol North America, Inc.), which has a nitrate concentration of 3.4 to 4.0 wt%.
(2) Use a 0.75 inch (20 millimeter) extruder;
(3) Use 3.5 pph carbon dioxide; and
(4) Omit the blue pigment.

At alumina boehmite concentrations of 4, 7 and 10 weight-parts all resulted in an undesirable decrease in cell size and an undesirable yellowing of the polymeric foam. The decrease in cell size and yellowing are likely a result of thermal degradation of the alumina boehmite during the foam manufacturing process. This Example illustrates why the nitrate concentration in the alumina boehmite is desirably 3.0 percent or less.

## Claims

1. A process for producing a polymeric foam comprising the following steps:
a. providing a foamable polymer composition comprising a blowing agent dispersed in a polymer matrix, the polymer matrix having a softening temperature; and
b. exposing the foamable polymer composition while at a temperature at or above the softening temperature of the polymer matrix to an environment having a pressure low enough to cause the foamable polymer composition to expand into a polymeric foam;
wherein the foamable polymer composition further comprises alumina boehmite dispersed in the polymer matrix and wherein more than 50 percent by weight of the polymers in the polymer matrix are thermoplastic polymers selected from olefinic polymers, alkenyl aromatic homopolymers and copolymers comprising both olefinic and alkenyl aromatic components.

2. The process of Claim 1, wherein the process is an extrusion process where the foamable polymer composition is provided in an extruder at an initial temperature that is above the softening temperature of the polymer matrix and at an initial pressure that precludes foaming of the foamable polymer composition and where step (b) occurs by expelling the foamable polymer composition to an environment having a pressure lower than the initial pressure and sufficiently low to cause the foamable polymer composition to expand into an extruded polymeric foam.

3. The process of Claim 1, wherein the alumina boehmite is present in the polymer matrix at a concentration in a range of 0.1 to 30 weight-percent based on polymer matrix weightt.

4. The process of Claim 1, wherein the alumina boehmite has a nitrate concentration of less than 3.0 weight percent.

5. The process of Claim 1, wherein 50 weight-percent of all the polymers in the polymer matrix are alkenyl aromatic polymers.

6. The process of Claim 1, wherein the blowing agent comprises carbon dioxide.

7. The process of Claim 1, wherein the blowing agent comprises carbon dioxide and at least one of iso-butane and water.

8. A polymeric foam comprising a polymer matrix defining a plurality of cells dispersed therein and further comprising alumina boehmite dispersed within the polymer matrix and wherein more than 50 percent by weight of the polymers in the polymer matrix are thermoplastic polymers selected from olefinic polymers, alkenyl aromatic homopolymers and copolymers comprising both olefinic and alkenyl aromatic components.

9. The polymeric foam of Claim 8, wherein the polymeric foam is extruded polymeric foam that is free of a network of polymer skins defining foam beads.

10. The polymeric foam of Claim 8, wherein the alumina boehmite is present at a concentration in a range of 0.1 to 30 weight percent based on total polymer weight in the polymer matrix.

11. The polymeric foam of Claim 8, wherein the alumina boehmite is present at a concentration in a range of 0.5 to 5 weight-percent based on polymer composition weight.

12. The polymeric foam of Claim 8, wherein the alumina boehmite has a nitrate concentration of less than three weight-percent.

13. The polymeric foam of claim 8, wherein more than 50 weight-percent of all the polymers in the polymer matrix are alkenyl aromatic polymers.

14. The polymeric foam of Claim 8, wherein the alkenyl aromatic polymer is selected from polystyrene homopolymer and styrenic copolymers.

15. The polymeric foam of Claim 8, wherein the polymeric foam has an open cell content of five percent or less.

## Patentansprüche

1. Ein Verfahren zum Herstellen eines Polymerschaumstoffs, das die folgenden Schritte beinhaltet:
a. Bereitstellen einer schäumbaren Polymerzusammensetzung, die ein in einer Polymermatrix dispergiertes Treibmittel beinhaltet, wobei die Polymermatrix eine Erweichungstemperatur aufweist; und
b. Aussetzen der schäumbaren Polymerzusammensetzung, während sie eine Temperatur bei oder über der Erweichungstemperatur der Polymermatrix aufweist, gegenüber einem Milieu mit einem Druck, der niedrig genug ist, um zu verursachen, dass die schäumbare Polymerzusammensetzung in einen Polymerschaumstoff expandiert;
wobei die schäumbare Polymerzusammensetzung ferner in der Polymermatrix dispergiertes Aluminiumoxid-Böhmit beinhaltet und wobei mehr als 50 Gewichtsprozent der Polymere in der Polymermatrix thermoplastische Polymere sind, ausgewählt aus Olefinpolymeren, aromatischen Alkenylhomopolymeren und Copolymeren, die sowohl Olefinkomponenten als auch aromatische Alkenylkomponenten beinhalten.

2. Verfahren gemäß Anspruch 1, wobei das Verfahren ein Extrusionsverfahren ist, bei dem die schäumbare Polymerzusammensetzung in einem Extruder bei einer Anfangstemperatur, die über der Erweichungstemperatur der Polymermatrix liegt, und bei einem Anfangsdruck, der das Schäumen der schäumbaren Polymerzusammensetzung hindert, liegt, bereitgestellt wird, und wobei Schritt (b) durch Ausstoßen der schäumbaren Polymerzusammensetzung in ein Milieu mit einem Druck, der niedriger als der Anfangsdruck und ausreichend niedrig ist, um zu verursachen, dass die schäumbare Polymerzusammensetzung in einen extrudierten Polymerschaumstoff expandiert, erfolgt.

3. Verfahren gemäß Anspruch 1, wobei das Aluminiumoxid-Böhmit in der Polymermatrix in einer Konzentration im Bereich von 0,1 bis 30 Gewichtsprozent, basierend auf dem Polymermatrixgewicht, vorhanden ist.

4. Verfahren gemäß Anspruch 1, wobei das Aluminiumoxid-Böhmit eine Nitratkonzentration von weniger als 3,0 Gewichtsprozent aufweist.

5. Verfahren gemäß Anspruch 1, wobei 50 Gewichtsprozent aller Polymere in der Polymermatrix aromatische Alkenylpolymere sind.

6. Verfahren gemäß Anspruch 1, wobei das Treibmittel Kohlenstoffdioxid beinhaltet.

7. Verfahren gemäß Anspruch 1, wobei das Treibmittel Kohlenstoffdioxid und mindestens eines von Isobutan und Wasser beinhaltet.

8. Ein Polymerschaumstoff, beinhaltend eine Polymermatrix, definierend eine Vielzahl von darin dispergierten Zellen, und ferner beinhaltend innerhalb der Polymermatrix dispergiertes Aluminiumoxid-Böhmit, und wobei mehr als 50 Gewichtsprozent der Polymere in der Polymermatrix thermoplastische Polymere sind, ausgewählt aus Olefinpolymeren, aromatischen Alkenylhomopolymeren und Copolymeren, die sowohl Olefinkomponenten als auch aromatische Alkenylkomponenten beinhalten.

9. Polymerschaumstoff gemäß Anspruch 8, wobei der Polymerschaumstoff extrudierter Polymerschaumstoff ist, der frei von einem Netz an Polymerhäuten, die Schaumstoffkügelchen definieren, ist.

10. Polymerschaumstoff gemäß Anspruch 8, wobei das Aluminiumoxid-Böhmit in der Polymermatrix in einer Konzentration in einem Bereich von 0,1 bis 30 Gewichtsprozent, basierend auf dem Gesamtpolymermatrixgewicht, vorhanden ist.

11. Polymerschaumstoff gemäß Anspruch 8, wobei das Aluminiumoxid-Böhmit in einer Konzentration in einem Bereich von 0,5 bis 5 Gewichtsprozent, basierend auf dem Polymerzusammensetzungsgewicht, vorhanden ist.

12. Polymerschaumstoff gemäß Anspruch 8, wobei das Aluminiumoxid-Böhmit eine Nitratkonzentration von weniger als drei Gewichtsprozent aufweist.

13. Polymerschaumstoff gemäß Anspruch 8, wobei mehr als 50 Gewichtsprozent aller Polymere in der Polymermatrix aromatische Alkenylpolymere sind.

14. Polymerschaumstoff gemäß Anspruch 8, wobei das aromatische Alkenylpolymer aus Polystyrolhomopolymer und Styrencopolymeren ausgewählt ist.

15. Polymerschaumstoff gemäß Anspruch 8, wobei der Polymerschaumstoff einen Gehalt an offenen Zellen von fünf Prozent oder weniger aufweist.

## Revendications

1. Un procédé pour produire une mousse polymère comprenant les étapes suivantes :
a. fournir une composition de polymère moussante comprenant un agent gonflant dispersé dans une matrice de polymère, la matrice de polymère ayant une température de ramollissement ; et
b. exposer la composition de polymère moussante tandis qu'elle est à une température au niveau ou au-dessus de la température de ramollissement de la matrice de polymère à un environnement ayant une pression suffisamment basse pour amener la composition de polymère moussante à s'étendre en une mousse polymère ;
dans lequel la composition de polymère moussante comprend en outre de l'alumine boehmite dispersée dans la matrice de polymère et dans lequel plus de 50 pour cent en poids des polymères dans la matrice de polymère sont des polymères thermoplastiques sélectionnés parmi des polymères oléfiniques, des homopolymères aromatiques alcényle et des copolymères comprenant à la fois des composants oléfiniques et aromatiques alcényle.

2. Le procédé de la revendication 1, dans lequel le procédé est un procédé d'extrusion où la composition de polymère moussante est fournie dans une extrudeuse à une température initiale qui est au-dessus de la température de ramollissement de la matrice de polymère et à une pression initiale qui empêche le moussage de la composition de polymère moussante et où l'étape (b) se produit en expulsant la composition de polymère moussante vers un environnement ayant une pression plus basse que la pression initiale et suffisamment basse pour amener la composition de polymère moussante à s'étendre en une mousse polymère extrudée.

3. Le procédé de la revendication 1, dans lequel l'alumine boehmite est présente dans la matrice de polymère à une concentration comprise dans une gamme allant de 0,1 à 30 pour cent en poids rapportée au poids de matrice de polymère.

4. Le procédé de la revendication 1, dans lequel l'alumine boehmite a une concentration en nitrates inférieure à 3,0 pour cent en poids.

5. Le procédé de la revendication 1, dans lequel 50 pour cent en poids de tous les polymères dans la matrice de polymère sont des polymères aromatiques alcényle.

6. Le procédé de la revendication 1, dans lequel l'agent gonflant comprend du dioxyde de

7. Le procédé de la revendication 1, dans lequel l'agent gonflant comprend du dioxyde de carbone et au moins soit de l'isobutane, soit de l'eau.

8. Une mousse polymère comprenant une matrice de polymère définissant une pluralité de cellules dispersées dans celle-ci et comprenant en outre de l'alumine boehmite dispersée à l'intérieur de la matrice de polymère et dans laquelle plus de 50 pour cent en poids des polymères dans la matrice de polymère sont des polymères thermoplastiques sélectionnés parmi des polymères oléfiniques, des homopolymères aromatiques alcényle et des copolymères comprenant à la fois des composants oléfiniques et aromatiques alcényle.

9. La mousse polymère de la revendication 8, dans laquelle la mousse polymère est de la mousse polymère extrudée qui est dépourvue d'un réseau de revêtements polymère définissant des billes de mousse.

10. La mousse polymère de la revendication 8, dans laquelle l'alumine boehmite est présente à une concentration comprise dans une gamme allant de 0,1 à 30 pour cent en poids rapportée au poids de polymère total dans la matrice de polymère.

11. La mousse polymère de la revendication 8, dans laquelle l'alumine boehmite est présente à une concentration comprise dans une gamme allant de 0,5 à 5 pour cent en poids rapportée au poids de composition de polymère.

12. La mousse polymère de la revendication 8, dans laquelle l'alumine boehmite a une concentration en nitrates inférieure à trois pour cent en poids.

13. La mousse polymère de la revendication 8, dans laquelle plus de 50 pour cent en poids de tous les polymères dans la matrice de polymère sont des polymères aromatiques alcényle.

14. La mousse polymère de la revendication 8, dans laquelle le polymère aromatique alcényle est sélectionné parmi un homopolymère polystyrène et des copolymères styréniques.

15. La mousse polymère de la revendication 8, dans laquelle la mousse polymère a une teneur en cellules ouvertes de cinq pour cent ou moins.
